(19) Europäisches Patentamt
European Patent Office
Office européen des brevets

(11) **EP 3 645 966 B1**

(12) **FASCICULE DE BREVET EUROPEEN**

(45) Date de publication et mention
de la délivrance du brevet:
**04.08.2021 Bulletin 2021/31**

(21) Numéro de dépôt: **18749012.3**

(22) Date de dépôt: **26.06.2018**

(51) Int Cl.:
***G01B 21/04*** *(2006.01)*

(86) Numéro de dépôt international:
**PCT/FR2018/051563**

(87) Numéro de publication internationale:
**WO 2019/002755 (03.01.2019 Gazette 2019/01)**

(54) **PROCEDE ET DISPOSITIF DE GENERATION D'UN SIGNAL IMPULSIONNEL A DES POSITIONS PARTICULIERES D'UN ELEMENT MOBILE**

VERFAHREN UND VORRICHTUNG ZUR ERZEUGUNG EINES IMPULSSIGNALS IN BESTIMMTEN POSITIONEN EINES BEWEGLICHEN ELEMENTS

METHOD AND DEVICE FOR GENERATING A PULSED SIGNAL AT PARTICULAR POSITIONS OF A MOVING ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2017 FR 1755953**

(43) Date de publication de la demande:
**06.05.2020 Bulletin 2020/19**

(73) Titulaire: **Micro-Controle - Spectra Physics
91000 Evry (FR)**

(72) Inventeurs:
• **GVERO, Daniel**
  **45110 Châteauneuf sur Loire (FR)**
• **AHRENS, Christophe**
  **45170 Aschères-le-Marché (FR)**

(74) Mandataire: **Gevers & Orès
Immeuble le Palatin 2
3 Cours du Triangle
CS 80165
92939 Paris La Défense Cedex (FR)**

(56) Documents cités:
DE-A1-102006 003 555    DE-A1-102014 200 131
JP-A- H0 562 093    JP-A- 2003 089 086

## Description

## DOMAINE TECHNIQUE

La présente invention concerne un procédé et un dispositif de génération d'un signal impulsionnel à des positions dites de déclenchement d'un élément mobile.

## ÉTAT DE LA TECHNIQUE

Généralement, bien que non exclusivement, un élément mobile est soumis à un déplacement relatif par rapport à un support fixe tel que, par exemple, une plaque (ou plateforme) de support, pourvu d'un objet à traiter.

Typiquement, le déplacement (ou mouvement) relatif de l'élément mobile par rapport au support et à l'objet à traiter, peut être généré par :

- un déplacement de l'élément mobile, l'objet étant fixe ;
- un déplacement de l'objet, l'élément dit mobile étant fixe ; ou
- des déplacements à la fois de l'élément mobile et de l'objet.

Souvent, un élément mobile comporte un système de traitement. A titre d'exemple, des systèmes de traitement comprennent, sans limitation, des systèmes optiques, des systèmes mécaniques, des systèmes électriques et/ou d'autres systèmes similaires, utilisés en association avec un tel système de traitement. Ce système de traitement est destiné à réaliser diverses actions (ou opérations de traitement, ou fonctions mécaniques, chimiques, électriques ou similaires), telles qu'une découpe laser ou une prise d'images, à des endroits particuliers sur l'objet à traiter, les fonctions de traitement étant mises en œuvre à des positions particulières de l'élément mobile lors du déplacement relatif entre l'élément mobile et l'objet.

Généralement, pour mettre en œuvre ce type d'opération, la cinématique et la position de l'élément mobile sont configurées pour arriver à la position recherchée à un temps prédéterminé, par exemple lorsque l'action de traitement particulière (une découpe laser par exemple) est réalisée. Plus spécifiquement, les actions sont réalisées sélectivement à des instants donnés, par exemple réguliers, et le déplacement de l'élément mobile est commandé et corrigé pour que l'élément mobile se trouve à la bonne position à chacun de ces instants donnés.

Les opérations de traitement sont généralement réalisées, en utilisant un asservissement pour commander une architecture de traitement de type maître/esclave. A titre d'exemple, l'élément maître correspond à l'instant de réalisation de l'action (par exemple l'instant d'émission d'une impulsion laser) et l'élément esclave correspond à l'atteinte de la position appropriée par l'élément mobile.

DE 10 2006 003555 A1 décrit un procédé de positionnement d'un outil, selon lequel une action est déclenchée lorsqu'un élément mobile a atteint une position prédéterminée.

Ainsi, à la lumière de ce qui précède, les divers calculs, corrections et commandes nécessaires pour réaliser de telles opérations de traitement sont difficiles à mettre en œuvre, coûteux et imprécis.

## EXPOSÉ DE L'INVENTION

La présente demande cherche à remédier à ces inconvénients des systèmes de l'art antérieur. Plus particulièrement, la présente demande concerne un procédé de génération d'un signal impulsionnel à des positions dites de déclenchement d'un élément mobile, ledit élément mobile étant apte à être soumis à un déplacement relatif selon au moins deux degrés de liberté.

Selon un mode de réalisation, le procédé comprend une étape de génération des positions de déclenchement, et ledit procédé est tel que, au cours d'au moins une partie du déplacement de l'élément mobile, la suite d'étapes successives suivantes est mise en œuvre de façon itérative :

- une étape de génération de positions dites réelles, consistant à générer des positions réelles dudit élément mobile définies selon des axes correspondant auxdits degrés de liberté, l'étape de génération de positions réelles comprenant une étape de mesure consistant à mesurer, en temps réel, des positions effectives successives de l'élément mobile, lesdites positions réelles comprenant au moins lesdites positions effectives ;
- pour des positions de déclenchement successives, à chaque fois pour une position de déclenchement dite courante :

  - une étape de comparaison consistant à comparer des positions réelles successives, générées en temps réel à l'étape de génération de positions réelles, à cette position de déclenchement courante de manière à identifier, parmi ces positions réelles successives, la position réelle la plus proche de ladite position de déclenchement courante, et ceci dans une limite donnée par rapport à ladite position de déclenchement courante ; et
  - une étape de génération de signal impulsionnel, consistant à générer un signal impulsionnel pour la position de déclenchement courante, si et dès que les deux conditions suivantes sont simultanément remplies :

    - l'élément mobile atteint ladite position réelle la plus proche ; et
    - cette position réelle la plus proche est située dans la limite donnée par rapport à ladite position de déclenchement courante.

Ainsi, lors du déplacement (relatif) de l'élément mobile (par rapport à un objet à traiter), on détermine la position de l'élément mobile qui est la plus proche d'une position de déclenchement où une action doit être réalisée. Lorsque cette position la plus proche est atteinte, on émet un signal impulsionnel (de déclenchement) qui peut déclencher l'action, par exemple une découpe laser. Ce signal impulsionnel peut correspondre à la commande d'une impulsion laser ou à la commande d'une autre action de type optique, mécanique, chimique ou autre, telle que par exemple une prise d'images.

Ainsi, le déclenchement est réalisé lorsque la position la plus proche est atteinte. Le procédé met donc en œuvre un asservissement maître/esclave, dans lequel l'élément maître est l'atteinte par l'élément mobile de la position recherchée et l'élément esclave est la génération du signal de déclenchement (lorsque cette position est atteinte), ce qui permet d'obtenir une mise en œuvre facilitée et précise (ne nécessitant pas d'asservissement précis du déplacement du mobile comme dans les solutions usuelles).

Dans le cadre de la présente invention, ledit élément mobile est apte à être déplacé selon N degrés de liberté (ou de mouvement ou de déplacement), N étant un entier supérieur ou égal à 2. A titre d'illustration, pour N égal à 6, si on considère un plan XY (par exemple horizontal) défini par une direction X et une direction Y orthogonales entre elles, les six degrés de liberté correspondent, respectivement, à une translation le long de la direction X et une rotation dite autour de cette direction X, à une translation le long de la direction Y et une rotation autour de cette direction Y, et à une translation le long d'une direction dite Z et une rotation autour de cette direction Z, la direction Z étant orthogonale auxdites directions X et Y. Le procédé décrit est également applicable à un nombre plus élevé de degrés de liberté.

De façon avantageuse, l'étape de génération de positions réelles comporte une étape d'interpolation consistant à déterminer une suite de positions interpolées entre à chaque fois deux positions effectives successives mesurées lors de l'étape de mesure, en tenant compte d'une vitesse de déplacement de l'élément mobile, lesdites positions réelles comprenant lesdites positions effectives et, entre deux positions effectives successives, lesdites positions interpolées.

De plus, avantageusement, l'étape de génération de positions de déclenchement comporte :

- une sous-étape de saisie consistant à saisir des positions souhaitées prédéterminées (de déclenchement) ; et
- une sous-étape de traitement consistant à adapter ces positions souhaitées à un système de déplacement configuré pour générer le déplacement relatif dudit élément mobile, à partir d'informations prédéterminées relatives à des erreurs dudit système de déplacement, pour en déduire lesdites positions de déclenchement.

En outre, de façon avantageuse, l'étape de comparaison comporte :

- une sous-étape de calcul consistant à calculer un paramètre de distance $D^2$, de préférence à l'aide de l'expression suivante :

$$D^2 = \sum_{i=1}^{N} (PRi - PCi)^2$$

dans laquelle :

- *PRi* représente la coordonnée selon un degré de liberté *Li* de la position réelle considérée ;
- *PCi* représente la coordonnée selon le degré de liberté *Li* de la position de déclenchement courante ;
- *N* représente le nombre de degrés de liberté *Li* de l'élément mobile ;

- une sous-étape de comparaison consistant à calculer la différence entre ce paramètre de distance $D^2$ et une valeur prédéterminée ; et
- une sous-étape d'évaluation consistant à évaluer la variation de ladite différence et à détecter la position à laquelle ladite différence est la plus faible, la position réelle la plus proche correspondant à cette dernière position.

La présente demande concerne également un dispositif de génération d'un signal impulsionnel à des positions dites de déclenchement d'un élément mobile, ledit élément mobile étant apte à être soumis à un déplacement relatif selon au moins deux degrés de liberté.

Dans un mode de réalisation, ledit dispositif comporte :

- une unité de génération des positions de déclenchement ;
- une unité de génération de positions dites réelles, configurée pour, au cours d'au moins une partie du déplacement de l'élément mobile, générer des positions réelles dudit élément mobile définies selon des axes correspondant auxdits degrés de liberté, l'unité de génération de positions réelles comprenant une unité de mesure configurée pour mesurer, en temps réel, des positions effectives successives de l'élément mobile, lesdites positions réelles comprenant au moins lesdites positions effectives ;
- une unité de comparaison configurée pour comparer, pour une position de déclenchement dite courante, des positions réelles successives, générées en temps réel par l'unité de génération de positions réelles, à cette position de déclenchement courante de manière à identifier, parmi ces positions réelles successives, la position réelle la plus proche de ladite position de déclenchement courante, et ceci dans une limite donnée par rapport à ladite position de déclenchement courante ; et

- une unité de génération de signal impulsionnel, configurée pour générer un signal impulsionnel pour la position de déclenchement courante, si et dès que les deux conditions suivantes sont simultanément remplies :

  ▪ l'élément mobile atteint ladite position réelle la plus proche ; et
  ▪ cette position réelle la plus proche est située dans la limite donnée par rapport à ladite position de déclenchement courante.

Dans un mode de réalisation particulier, l'unité de génération de positions réelles comporte une unité d'interpolation configurée pour déterminer une suite de positions interpolées entre à chaque fois deux positions effectives successives mesurées par l'unité de mesure, en tenant compte d'une vitesse de déplacement de l'élément mobile, lesdites positions réelles comprenant lesdites positions effectives et, entre deux positions effectives successives, lesdites positions interpolées.

Par ailleurs, dans un mode de réalisation particulier, l'unité de génération de positions de déclenchement comporte :

- une sous-unité de saisie de positions théoriques prédéterminées de déclenchement ; et
- une sous-unité de traitement configurée pour adapter ces positions théoriques à un système de déplacement configuré pour générer le déplacement dudit élément mobile, à partir d'informations prédéterminées relatives à des erreurs dudit système de déplacement, pour en déduire lesdites positions de déclenchement.

En outre, avantageusement, l'unité de comparaison comporte :

- une sous-unité de calcul configurée pour calculer un paramètre de distance $D^2$, de préférence à l'aide de l'expression suivante :

$$D^2 = \sum_{i=1}^{N} (PRi - PCi)^2$$

dans laquelle :

- *PRi* représente la coordonnée selon un degré de liberté *Li* de la position réelle considérée ;
- *PCi* représente la coordonnée selon le degré de liberté *Li* de la position de déclenchement courante ;

- *N* représente le nombre de degrés de liberté *Li* de l'élément mobile ;

- une sous-unité de comparaison configurée pour calculer la différence entre ce paramètre de distance $D^2$ et une valeur prédéterminée ; et
- une sous-unité d'évaluation configurée pour évaluer la variation de ladite différence et pour détecter la position à laquelle ladite différence est la plus faible, la position réelle la plus proche correspondant à cette position.

La présente demande concerne également un ensemble de traitement (optique, mécanique, chimique,...) d'un objet, par exemple un composant électronique, ledit ensemble de traitement comportant :

- un support portant ledit objet ;
- un élément mobile pourvu d'un système de traitement susceptible de réaliser une action (de type optique, mécanique, chimique,...) lors de la réception d'un signal impulsionnel de déclenchement, l'élément mobile réalisant un déplacement relatif par rapport audit support ; et
- un dispositif de génération d'un signal impulsionnel, tel que celui décrit ci-dessus, qui est destiné à générer et à transmettre audit système de traitement un signal impulsionnel lors du déplacement dudit élément mobile.

## BRÈVE DESCRIPTION DES FIGURES

Les figures annexées permettent une compréhension plus complète du procédé et du dispositif pour générer des signaux impulsionnels à des positions particulières d'un élément mobile. Sur ces figures, des références identiques désignent des éléments semblables.

La figure 1 est le schéma d'un mode de réalisation particulier d'un dispositif de génération de signal impulsionnel.
La figure 2 illustre schématiquement des degrés de liberté possibles lors d'un déplacement (relatif) de l'élément mobile.
La figure 3 est le schéma synoptique d'une unité de comparaison du dispositif de la figure 1.
La figure 4 montre schématiquement, en partie, une trajectoire de déplacement d'un élément mobile par rapport à une position dite de déclenchement.
La figure 5 illustre schématiquement un procédé de génération de signaux impulsionnels, mis en œuvre par le dispositif de la figure 1.

## DESCRIPTION DÉTAILLÉE

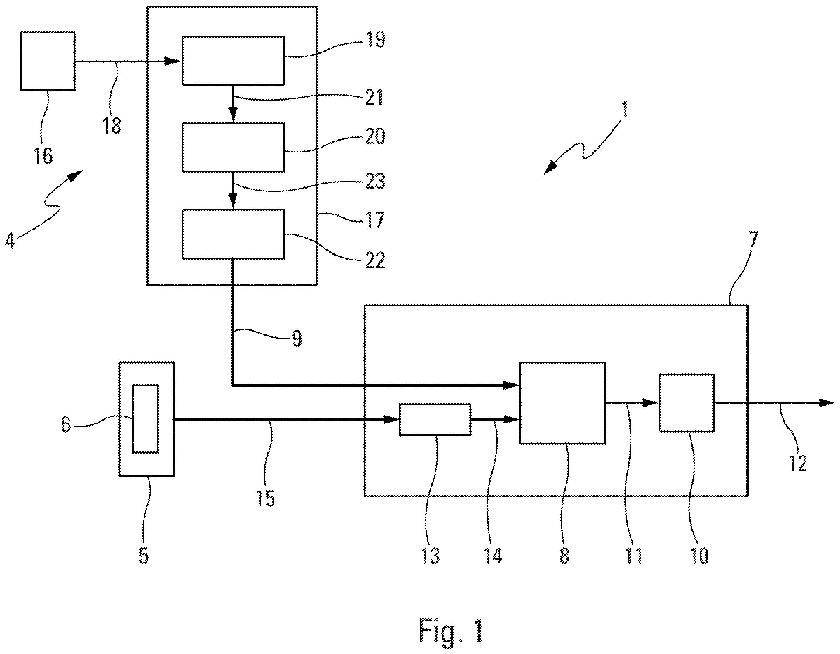

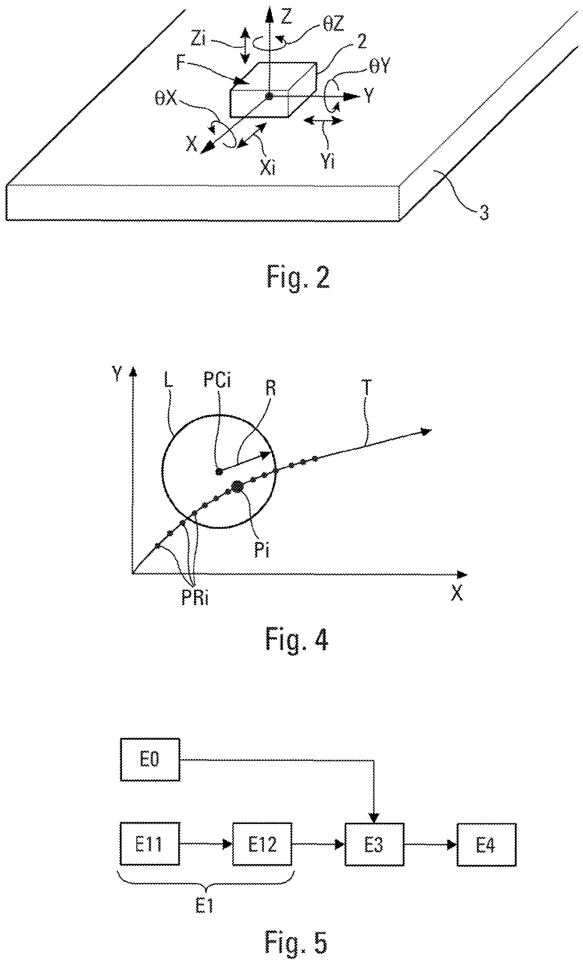

Le dispositif 1 représenté schématiquement sur la figure 1 est un dispositif de génération d'un signal impulsionnel à des positions particulières dites de déclenchement d'un élément mobile 2 (figure 2).

Ledit élément mobile 2 est soumis à un déplacement relatif par rapport à un support 3 (figure 2), par exemple une plaque (ou plateforme) de support, pourvu d'un objet (non représenté) à traiter.

Dans le cadre de la présente invention, le déplacement (ou mouvement) relatif de l'élément mobile 2 par rapport au support 3 et à l'objet correspond de préférence à un déplacement de l'élément mobile 2, le support 3 et l'objet étant fixes. Toutefois, il peut également s'agir :

- d'un déplacement de l'objet, l'élément (dit mobile) étant fixe ; ou
- de déplacements à la fois de l'élément mobile et de l'objet.

Dans le cadre de la présente invention, ledit élément mobile 2 est apte à être soumis à un déplacement relatif selon N degrés de liberté, N étant un entier supérieur ou égal à 2.

On présente ci-après un exemple dans lequel N est égal à 6. Le support 3 est par exemple agencé sensiblement parallèlement à un plan horizontal XY défini par une direction dite X (ou direction longitudinale) et une direction dite Y (ou direction latérale), comme illustré sur la figure 2. Le repère F représenté sur la figure 2 qui est destiné à faciliter la compréhension comprend, en plus des directions (ou axes) X et Y formant le plan horizontal XY, une direction (ou axe) dite Z (ou verticale) qui est orthogonale audit plan XY. Les six degrés de liberté possibles (représentés par des doubles flèches) correspondent, respectivement, comme illustré sur la figure 2 :

- à une translation, nommée $X_i$, le long de la direction X ;
- à une rotation dite $\theta X$, autour de la direction X ;
- à une translation, nommée $Y_i$, le long de la direction Y ;
- à une rotation dite $\theta Y$, autour de la direction Y ;
- à une translation, nommée $Z_i$, le long de la direction Z ; et
- à une rotation dite $\theta Z$, autour de la direction Z.

Le procédé et le dispositif sont également applicables à un autre nombre N (supérieur à 2) de degrés de liberté, et notamment à un nombre N supérieur à 6 par exemple dans le cadre de positionnements multiaxes complexes.

Dans un mode de réalisation, ledit mobile 2 et ledit support 3 font partie d'un ensemble de traitement (non représenté). Cet ensemble de traitement de différents types possibles, comporte :

- ledit support 3 portant ledit objet ;

- ledit élément mobile 2 pourvu d'un système de traitement susceptible de réaliser une action (de type optique, mécanique, chimique,...) lors de la réception d'un signal impulsionnel de déclenchement, l'élément mobile 2 et le système de traitement réalisant un déplacement relatif par rapport au support 3 et à l'objet à traiter ; et
- ledit dispositif 1 de génération d'un signal impulsionnel, précisé ci-dessous, qui est destiné à générer et transmette audit système de traitement un signal impulsionnel lors du déplacement dudit élément mobile 2.

Le dispositif 1 de génération d'un signal impulsionnel comporte, comme représenté sur la figure 1 :

- une unité 4 de génération des positions de déclenchement, précisée ci-dessous ;
- une unité 5 de génération de positions dites réelles. L'unité 5 est configurée pour générer, automatiquement et en temps réel, des positions réelles dudit élément mobile 2 qui sont définies selon au moins certains des degrés de liberté $X_i$, $Y_i$, $Z_i$, $\theta X$, $\theta Y$ et $\theta Z$ précitées. L'unité 5 comporte, à cet effet, une unité de mesure 6 configurée pour mesurer, en temps réel, des positions effectives successives de l'élément mobile 2. Lesdites positions réelles comprennent au moins ces positions effectives mesurées, comme précisé ci-dessous ; et
- une unité centrale 7 comprenant :

  • une unité de comparaison 8 configurée pour comparer, automatiquement et en temps réel, pour une position de déclenchement dite courante, des positions réelles successives (générées en temps réel par l'unité 5 de génération de positions réelles), à cette position de déclenchement courante reçue via une liaison 9 de l'unité 4 de génération de positions de déclenchement. L'unité de comparaison 8 est configurée pour, à partir de cette comparaison, identifier, parmi ces positions réelles successives (reçues de l'unité 5), la position réelle la plus proche de ladite position de déclenchement courante, et ceci dans une limite donnée par rapport à ladite position de déclenchement courante ; et
  • une unité 10 de génération d'un signal impulsionnel, qui est reliée par l'intermédiaire d'une liaison 11 à l'unité de comparaison 8, qui reçoit le résultat des traitements mis en œuvre par l'unité de comparaison 8 et qui est apte à émettre automatiquement un signal impulsionnel par l'intermédiaire d'une liaison 12 à un moyen utilisateur (non représenté), de préférence au système de traitement précité.

Dans un mode de réalisation, l'unité 10 de génération de signal impulsionnel est configurée pour générer un signal impulsionnel pour la position de déclenchement courante, si et dès que les deux conditions suivantes sont simultanément remplies :

- l'élément mobile 2 atteint ladite position réelle la plus proche ; et
- cette position réelle la plus proche est située dans la limite donnée par rapport à ladite position de déclenchement courante.

Dans un mode de réalisation, l'unité 5 de génération de positions réelles comporte également une unité d'interpolation 13 qui est reliée par l'intermédiaire d'une liaison 14 à l'unité de comparaison 8. L'unité d'interpolation 13 peut être intégrée dans l'unité 5, ou bien dans l'unité centrale 7 comme dans l'exemple de la figure 1.

L'unité d'interpolation 13 est configurée pour déterminer une suite de positions interpolées entre, à chaque fois, deux positions effectives successives mesurées par l'unité de mesure 6, par exemple une première position ou « position amont » et une seconde position ou « position aval ». L'unité d'interpolation 13 peut être configurée pour tenir compte d'une vitesse de déplacement supposée de l'élément mobile 2 entre ces première et seconde positions ou positions amont et aval, et elle détermine, de façon usuelle, un nombre donné de positions interpolées entre ces deux positions successives (première et seconde ou amont et aval) mesurées. La vitesse de déplacement prise en compte dans une étape courante peut être la vitesse de déplacement de l'élément mobile 2 de l'étape précédente, qui est mesurée. L'interpolation est réalisée avec une fréquence d'interpolation suffisamment grande pour qu'il ne puisse pas physiquement y avoir une variation de vitesse trop grande et que l'on reste dans une résolution de positionnement très inférieure à la résolution visée par l'application envisagée.

Les positions réelles transmises à l'unité de comparaison 8, par l'intermédiaire de la liaison 14, comprennent ainsi :

- les positions effectives mesurées par l'unité de mesure 6 (à une fréquence par exemple de 5 MHz) ; et
- entre deux positions effectives successives, les positions interpolées, déterminées par l'unité d'interpolation 13 et émises à une fréquence plus élevée, par exemple à 200 MHz.

Par ailleurs, dans un mode de réalisation particulier, l'unité 4 de génération de positions de déclenchement comporte, comme représenté sur la figure 1 :

- un élément de saisie 16, par exemple un clavier d'ordinateur, une souris et/ou tout autre moyen usuel de saisie de données. L'élément de saisie 16 permet à un opérateur de saisir des positions souhaitées et prédéterminées (de déclenchement) dans un élément de traitement 17, par exemple une unité centrale de traitement de type CPU (« Central Processing Unit » en anglais), comme illustré par une liaison 18 ; et
- l'élément de traitement 17 qui est configuré pour adapter ces positions souhaitées à un système de déplacement configuré pour générer le déplacement relatif de l'élément mobile, à partir d'informations prédéterminées relatives à des erreurs dudit système de déplacement, pour en déduire lesdites positions de déclenchement.

A cet effet, dans un mode de réalisation, l'élément de traitement 17 peut comporter :

- un élément 19 qui est relié par l'intermédiaire de la liaison 18 à l'élément de saisie 16 et qui contient des caractéristiques notamment du système de déplacement précité ;
- un élément 20 qui est relié par l'intermédiaire d'une liaison 21 à l'élément 19 et qui détermine des erreurs du système de déplacement ; et
- un élément 22 qui est relié par l'intermédiaire d'une liaison 23 à l'élément 20 et qui détermine des positions de déclenchement, correspondant à des positions corrigées des positions souhaitées entrées (à l'aide de l'élément de saisie 16) en tenant compte des erreurs du système de déplacement.

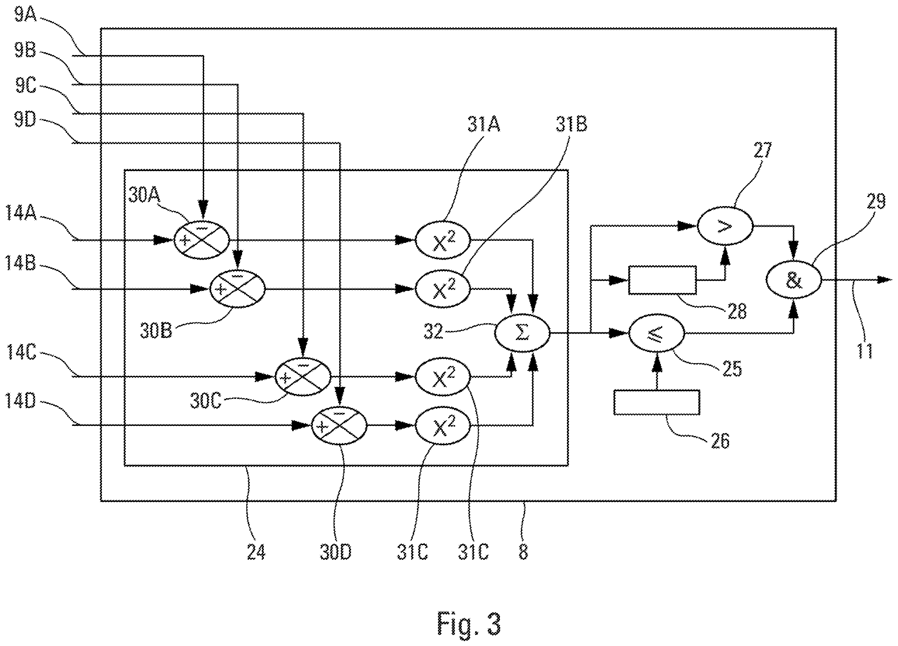

En outre, l'unité de comparaison 8 (qui est configurée pour identifier la position réelle la plus proche de la position de déclenchement courante) comporte, comme représenté sur la figure 3 :

- un élément de calcul 24 qui est configuré pour calculer un paramètre de distance $D^2$ précisé ci-dessous ;
- un élément de comparaison 25 qui est configuré pour calculer la différence entre ce paramètre de distance $D^2$ et une valeur prédéterminée $R^2$ enregistré dans un élément de stockage 26 ; et
- une sous-unité d'évaluation qui est configurée pour évaluer la variation de ladite différence et pour détecter la position à laquelle ladite différence est la plus faible, la position réelle la plus proche correspondant à cette position.

La sous-unité d'évaluation comporte un élément 29 qui vérifie si les deux conditions suivantes sont simultanément remplies :

- une première condition, qui est vérifiée par l'élément 25, selon laquelle la position réelle Pi la plus proche est située dans la limite donnée L par rapport à la position de déclenchement courante PCi, comme représenté sur la figure 4. Sur cette figure 4, on a représenté la position de déclenchement courante PCi, à laquelle est associée une limite donnée L (en l'occurrence un cercle de rayon R centré sur PCi) ainsi que différentes positions réelles PRi successives de l'élément mobile qui se déplace le long d'une trajectoire T (située à titre d'illustration dans un plan XY dans cet exemple de la figure 4) ; et

- une seconde condition, qui est vérifiée par des éléments 27 et 28, selon laquelle l'élément mobile 2 atteint la position réelle Pi la plus proche parmi les différentes positions réelles PRi lors de son déplacement le long de la trajectoire T.

Pour ce faire :

- l'élément 28 est un élément permettant d'enregistrer le paramètre de distance $D^2$ (calculé par l'élément de calcul 24) pour la position réelle précédent la position réelle courante ; et
- l'élément 27 calcule, pour chaque positon réelle courante, la différence entre ce paramètre de distance pour la position précédente (enregistré dans l'élément 28) et le paramètre de distance $D^2$ (calculé par l'élément de calcul 24) pour cette position réelle courante, et il conclut que la position réelle Pi la plus proche est atteinte dès que cette différence (qui décroît préalablement lorsque l'engin mobile s'approche de la position de déclenchement courante PCi) recommence à augmenter.

Dans un mode de réalisation préféré, l'élément de calcul 24 calcule le paramètre de distance $D^2$ à l'aide de l'expression suivante :

$$ D^2 = \sum_{i=1}^{N} (PRi - PCi)^2 $$

dans laquelle :

- $PRi$ représente la coordonnée selon un degré de liberté $Li$ de la position réelle considérée ;
- $PCi$ représente la coordonnée selon le degré de liberté $Li$ de la position de déclenchement courante ; et
- $N$ représente le nombre de degrés de liberté $Li$ de l'élément mobile.

Pour ce faire, dans le cas d'un exemple de réalisation basé sur quatre degrés de liberté ($N$ = 4), l'élément de calcul 24 comporte :

- des éléments 30A, 30B, 30C et 30D pour calculer les différences, respectivement, entre d'une part les quatre valeurs $PRi$ (PR1, PR2, PR3, PR4)) reçues via des liaisons 14A, 14B, 14C et 14D (faisant partie de la liaison 14 de la figure 1) et d'autre part les quatre valeurs $PCi$ (PC1, PC2, PC3, PC4) reçues via des liaisons 9A, 9B, 9C et 9D (faisant partie de la liaison 9 de la figure 1) ;
- des éléments 31A, 31B, 31C et 31D pour calculer, respectivement, les carrés de ces différences ; et
- un élément 32 pour sommer les résultats fournis par les éléments 31A, 31B, 31C et 31D.

Optionnellement, au lieu d'utiliser un calcul des moindres carrés comme décrit ci-dessus, l'élément de calcul 24 peut également utiliser un autre calcul tel qu'une somme de valeurs absolues ou un calcul avec une autre puissance par exemple.

On décrit ci-après le fonctionnement du dispositif 1 tel que décrit ci-dessus, à partir d'un procédé (représenté sur la figure 5), de génération d'un signal impulsionnel.

Ledit procédé comprend une étape préliminaire E0 de génération des positions de déclenchement, mise en œuvre par l'unité 4.

Ledit procédé comprend de plus, au cours d'au moins une partie du déplacement de l'élément mobile, la suite d'étapes successives suivantes qui est mise en œuvre de façon itérative :

- une étape E1 de génération de positions réelles, mise en œuvre par l'unité 5 et consistant à générer des positions réelles PRi (figure 4) dudit élément mobile 2, qui sont définies selon des axes correspondant aux degrés de liberté considérés, l'étape E1 comprenant :

    • une étape de mesure E11, mise en œuvre par l'unité 6 et consistant à mesurer, en temps réel, des positions effectives successives de l'élément mobile ; et
    • une étape d'interpolation E12, mise en œuvre par l'unité 13 et consistant à déterminer une suite de positions interpolées entre à chaque fois deux positions effectives successives mesurées lors de l'étape de mesure E11, les positions réelles comprenant l'ensemble des positions effectives mesurées et des positions interpolées ;

- pour des positions de déclenchement successives, à chaque fois pour une position de déclenchement dite courante PCi :

    • une étape de comparaison E3, mise en œuvre par l'unité 8 et consistant à comparer des positions réelles successives, générées en temps réel à l'étape E1 de génération de positions réelles, à cette position de déclenchement courante PCi de manière à identifier, parmi ces positions réelles successives PRi, la position réelle Pi la plus proche de ladite position de déclenchement courante PCi, et ceci dans la limite donnée L par rapport à ladite position de déclenchement courante PCi ; et
    • une étape E4 de génération de signal impulsionnel, mise en œuvre par l'unité 10 et consistant à générer un signal impulsionnel pour la position de déclenchement courante PCi, si et dès que les deux conditions suivantes sont simultanément remplies :

> ▪ l'élément mobile 2 atteint ladite position réelle Pi la plus proche (parmi les différentes positions réelles PRi atteintes successivement) ; et
> ▪ cette position réelle Pi la plus proche est située dans la limite donnée L par rapport à la position de déclenchement courante PCi considérée.

Lorsqu'un signal impulsionnel est généré à l'étape E4 (à la position de déclenchement courante), on prend en compte la position de déclenchement suivante comme nouvelle position de déclenchement courante, et on met de nouveau en œuvre les étapes E3 et E4 pour cette nouvelle position de déclenchement courante. Ces étapes E3 et E4 sont mises en œuvre de façon itérative pour chaque position de déclenchement.

## Revendications

1. Procédé de génération d'un signal impulsionnel à des positions dites de déclenchement d'un élément mobile (2), ledit élément mobile (2) étant apte à être soumis à un déplacement relatif selon au moins deux degrés de liberté, ledit procédé comprenant une étape de génération des positions de déclenchement, procédé selon lequel, au cours d'au moins une partie du déplacement de l'élément mobile (2), la suite d'étapes successives suivantes est mise en œuvre de façon itérative :

   - une étape (E1) de génération de positions dites réelles, consistant à générer des positions réelles (PRi) dudit élément mobile (2) définies selon des axes (Xi, θX, Yi, θY, Zi, θZ) correspondant auxdits degrés de liberté, l'étape (E1) de génération de positions réelles comprenant une étape de mesure (E11) consistant à mesurer, en temps réel, des positions effectives successives de l'élément mobile (2), lesdites positions réelles (PRi) comprenant au moins lesdites positions effectives ;
   - pour des positions de déclenchement successives, à chaque fois pour une position de déclenchement (PCi) dite courante :

     • une étape de comparaison (E3) consistant à comparer des positions réelles successives (PRi), générées en temps réel à l'étape (E1) de génération de positions réelles, à cette position de déclenchement courante (PCi) de manière à identifier, parmi ces positions réelles successives (PRi), la position réelle (Pi) la plus proche de ladite position de déclenchement courante (PCi), et ceci dans une limite donnée (L) par rapport à ladite position de déclenchement (PCi) courante ; et
     • une étape (E4) de génération de signal impulsionnel, consistant à générer un signal impulsionnel pour la position de déclenchement courante (PCi), si et dès que les deux conditions suivantes sont simultanément remplies :

       ▪ l'élément mobile (2) atteint ladite position réelle (Pi) la plus proche ; et
       ▪ cette position réelle (Pi) la plus proche est située dans la limite donnée (L) par rapport à ladite position de déclenchement courante (PCi).

2. Procédé selon la revendication 1, **caractérisé en ce que** l'étape (E1) de génération de positions réelles comporte une étape d'interpolation (E12) consistant à déterminer une suite de positions interpolées entre à chaque fois deux positions effectives successives mesurées lors de l'étape de mesure, en tenant compte d'une vitesse de déplacement de l'élément mobile, lesdites positions réelles (PRi) comprenant lesdites positions effectives et, entre deux positions effectives successives, lesdites positions interpolées.

3. Procédé selon l'une des revendications 1 et 2, **caractérisé en ce que** l'étape (E1) de génération de positions de déclenchement comporte :

   - une sous-étape de saisie consistant à saisir des positions souhaitées ; et
   - une sous-étape de traitement consistant à adapter ces positions souhaitées à un système de déplacement configuré pour générer le déplacement relatif dudit élément mobile (2), à partir d'informations prédéterminées relatives à des erreurs dudit système de déplacement, pour en déduire lesdites positions de déclenchement.

4. Procédé selon l'une quelconque des revendications précédentes, **caractérisé en ce que** l'étape de comparaison (E3) comporte :

   - une sous-étape de calcul consistant à calculer un paramètre de distance ;
   - une sous-étape de comparaison consistant à calculer la différence entre ce paramètre de distance et une valeur prédéterminée ; et
   - une sous-étape d'évaluation consistant à évaluer la variation de ladite différence et à détecter la position à laquelle ladite différence est la plus faible, la position réelle la plus proche correspondant à cette dernière position.

5. Procédé selon la revendication 4, **caractérisé en ce que** la sous-étape de calcul consiste à calculer le paramètre de distance $D^2$ à l'aide de l'expression suivante :

$$D^2 = \sum_{i=1}^{N} (PRi - PCi)^2$$

dans laquelle :

- *PRi* représente la coordonnée selon un degré de liberté *Li* de la position réelle considérée ;
- *PCi* représente la coordonnée selon le degré de liberté *Li* de la position de déclenchement courante ; et
- *N* représente le nombre de degrés de liberté *Li* de l'élément mobile (2).

6. Dispositif de génération d'un signal impulsionnel à des positions dites de déclenchement d'un élément mobile (2), ledit élément mobile (2) étant apte à être soumis à un déplacement relatif selon au moins deux degrés de liberté, ledit dispositif (1) comprenant :

- une unité (4) de génération des positions de déclenchement ;
- une unité (5) de génération de positions dites réelles, configurée pour, au cours d'au moins une partie du déplacement de l'élément mobile, générer des positions réelles (PRi) dudit élément mobile (2) définies selon des axes (Xi, θX, Yi, θY, Zi, θZ) correspondant auxdits degrés de liberté, l'unité de génération de positions réelles comprenant une unité de mesure (6) configurée pour mesurer, en temps réel, des positions effectives successives de l'élément mobile (2), lesdites positions réelles (PRi) comprenant au moins lesdites positions effectives ;
- une unité de comparaison (8) configurée pour comparer, pour une position de déclenchement (PCi) dite courante, des positions réelles successives (PRi), générées en temps réel par l'unité (5) de génération de positions réelles, à cette position de déclenchement courante (PCi) de manière à identifier, parmi ces positions réelles successives (PRi), la position réelle (Pi) la plus proche de ladite position de déclenchement courante (PCi), et ceci dans une limite donnée (L) par rapport à ladite position de déclenchement courante (PCi) ; et
- une unité (10) de génération de signal impulsionnel, configurée pour générer un signal impulsionnel pour la position de déclenchement courante (PCi), si et dès que les deux conditions suivantes sont simultanément remplies :

- l'élément mobile (2) atteint ladite position réelle (Pi) la plus proche ; et
- cette position réelle (Pi) la plus proche est située dans la limite donnée (L) par rapport à ladite position de déclenchement courante (PCi).

7. Dispositif selon la revendication 6, **caractérisé en ce que** l'unité de génération (5) de positions réelles comporte une unité d'interpolation (13) configurée pour déterminer une suite de positions interpolées entre à chaque fois deux positions effectives successives mesurées par l'unité de mesure (6), en tenant compte d'une vitesse de déplacement de l'élément mobile, lesdites positions réelles comprenant lesdites positions effectives et, entre deux positions effectives successives, lesdites positions interpolées.

8. Dispositif selon l'une des revendications 6 et 7, **caractérisé en ce que** l'unité (4) de génération de positions de déclenchement comporte :

- une sous-unité de saisie (16) configurée pour saisir des positions théoriques prédéterminées de déclenchement ; et
- une sous-unité de traitement (17) configurée pour adapter ces positions théoriques à un système de déplacement configuré pour générer le déplacement dudit élément mobile, à partir d'informations prédéterminées relatives à des erreurs dudit système de déplacement, pour en déduire lesdites positions de déclenchement.

9. Dispositif selon l'une quelconque des revendications 6 à 8, **caractérisé en ce que** l'unité de comparaison (8) comporte :

- une sous-unité de calcul (24) configurée pour calculer un paramètre de distance ;
- une sous-unité de comparaison (25) configurée pour calculer la différence entre ce paramètre de distance et une valeur prédéterminée ; et
- une sous-unité d'évaluation (29) configurée pour évaluer la variation de ladite différence et pour détecter la position à laquelle ladite différence est la plus faible, la position réelle la plus proche correspondant à cette position.

10. Ensemble de traitement d'un objet, **caractérisé en ce qu'**il comporte :

- un support (3) portant ledit objet ;
- un élément mobile (2) pourvu d'un système de traitement susceptible de réaliser une action lors de la réception d'un signal impulsionnel de déclenchement, l'élément mobile (2) réalisant un déplacement relatif par rapport audit support (3) ; et

- un dispositif (1) de génération d'un signal impulsionnel, selon l'une quelconque des revendications 6 à 9, qui est destiné à générer et à transmettre audit système de traitement des signaux impulsionnels lors du déplacement dudit élément mobile (2).

**Patentansprüche**

1. Verfahren zur Erzeugung eines Impulssignals an Positionen, genannt Auslösungspositionen, eines beweglichen Elements (2), wobei das bewegliche Element (2) geeignet ist, gemäß mindestens zwei Freiheitsgraden einer relativen Bewegung unterzogen zu werden, wobei das Verfahren einen Schritt zur Erzeugung von Auslösungspositionen umfasst, Verfahren, nach dem im Laufe mindestens eines Teils der Bewegung des beweglichen Elements (2) die folgende sukzessive Schrittefolge auf iterative Weise durchgeführt wird:

 - einen Schritt (E1) zur Erzeugung von Positionen, genannt Istpositionen, bestehend aus Erzeugen von Istpositionen (PRi) des beweglichen Elements (2), definiert gemäß den Achsen (Xi, θX, Yi, θY, Zi, θZ), die den Freiheitsgraden entsprechen, wobei der Schritt (E1) zur Erzeugung von Istpositionen einen Messschritt (E11) umfasst, bestehend aus Messen, in Echtzeit, von tatsächlichen sukzessiven Positionen des beweglichen Elements (2), wobei die Istpositionen (PRi) mindestens die tatsächlichen Positionen umfassen;
 - für sukzessive Auslösungspositionen, jedes Mal für eine aktuell genannte Auslösungsposition (PCi):

 • einen Vergleichsschritt (E3), bestehend aus Vergleichen der sukzessiven Istpositionen (PRi), erzeugt in Echtzeit bei dem Schritt (E1) zur Erzeugung von Istpositionen, mit dieser aktuellen Auslösungsposition (PCi) zwecks identifizieren, unter diesen sukzessiven Istpositionen (PRi), der zu der aktuellen Auslösungsposition (PCi) nächstgelegenen Istposition (Pi), und dies bezogen auf die aktuelle Auslösungsposition (PCi) in einer gegebenen Begrenzung (L); und
 • einen Schritt (E4) zur Erzeugung des Impulssignals, bestehend aus Erzeugen eines Impulssignals für die aktuelle Auslösungsposition (PCi), wenn und seitdem die zwei folgenden Bedingungen gleichzeitig erfüllt sind:
 • das bewegliche Element (2) erreicht die nächstgelegene Istposition (Pi); und
 • diese nächstgelegene Istposition (Pi) befindet sich bezogen auf die aktuelle Auslösungsposition (PCi) innerhalb der gegebenen Begrenzung (L).

2. Verfahren nach Anspruch 1, **dadurch gekennzeichnet, dass** der Schritt (E1) zur Erzeugung von Istpositionen einen Interpolationsschritt (E12) beinhaltet, bestehend aus Bestimmen einer Folge von jedes Mal zwischen zwei sukzessiven tatsächlichen Positionen, gemessen bei dem Messschritt, interpolierten Positionen, unter Berücksichtigung einer Bewegungsgeschwindigkeit des beweglichen Elements, wobei die Istpositionen (PRi) die tatsächlichen Positionen und, zwischen zwei sukzessiven tatsächlichen Positionen, die interpolierten Positionen umfassen.

3. Verfahren nach einem der Ansprüche 1 und 2, **dadurch gekennzeichnet, dass** der Schritt (E1) zur Erzeugung von Auslösungspositionen beinhaltet:

 - einen Erfassungsteilschritt, bestehend aus Erfassen von gewünschten Positionen; und
 - einen Verarbeitungsteilschritt, bestehend aus Anpassen dieser gewünschten Positionen an ein Bewegungssystem, konfiguriert zum Erzeugen der relativen Bewegung des beweglichen Elements (2) ausgehend von relativ zu den Fehlern des Bewegungssystems vorher festgelegten Informationen, um daraus die Auslösungspositionen abzuleiten.

4. Verfahren nach einem der vorstehenden Ansprüche, **dadurch gekennzeichnet, dass** der Vergleichsschritt (E3) beinhaltet:

 - einen Berechnungsteilschritt, bestehend aus Berechnen eines Abstandsparameters;
 - einen Vergleichsteilschritt, bestehend aus Berechnen des Unterschieds zwischen diesem Abstandsparameter und einem vorher festgelegten Wert; und
 - einen Bewertungsteilschritt, bestehend aus Bewerten der Variation des Unterschieds und aus Detektieren der Position, an der der Unterschied am geringsten ist, wobei die nächstgelegene Istposition dieser letzten Position entspricht.

5. Verfahren nach Anspruch 4, **dadurch gekennzeichnet, dass** der Berechnungsteilschritt aus Berechnen des Abstandsparameters $D^2$ mithilfe des folgenden Ausdrucks besteht:

$$D^2 = \sum_{i=1}^{N} (PRi - PCi)^2$$

wobei:

- *PRi* die Koordinate gemäß einem Freiheitsgrad *Li* der betrachteten Istposition darstellt;
- *PCi* die Koordinate gemäß dem Freiheitsgrad *Li* der aktuellen Auslösungsposition darstellt; und
- N die Anzahl von Freiheitsgraden *Li* des beweglichen Elements (2) darstellt.

**6.** Vorrichtung zur Erzeugung eines Impulssignals an Positionen, genannt Auslösungspositionen, eines beweglichen Elements (2), wobei das bewegliche Element (2) geeignet ist, gemäß mindestens zwei Freiheitsgraden einer relativen Bewegung unterzogen zu werden, wobei die Vorrichtung (1) umfasst:

- eine Einheit (4) zur Erzeugung von Auslösungspositionen;
- einen Einheit (5) zur Erzeugung von Positionen, genannt Istpositionen, konfiguriert, um im Laufe mindestens eines Teils der Bewegung des beweglichen Elements Istpositionen (PRi) des beweglichen Elements (2) zu erzeugen, definiert gemäß den Achsen (Xi, θX, Yi, θY, Zi, θZ), die den Freiheitsgraden entsprechen, wobei die Einheit zur Erzeugung von Istpositionen eine Messeinheit (6) umfasst, konfiguriert zum Messen, in Echtzeit, von tatsächlichen sukzessiven Positionen des beweglichen Elements (2) wobei die Istpositionen (PRi) mindestens die tatsächlichen Positionen umfassen;
- eine Vergleichseinheit (8), konfiguriert zum Vergleichen von sukzessiven Istpositionen (PRi) für eine aktuell genannte Auslösungsposition (PCi), erzeugt in Echtzeit durch die Einheit (5) zur Erzeugung von Istpositionen, mit dieser aktuellen Auslösungsposition (PCi) zwecks identifizieren, unter den sukzessiven Istpositionen (PRi), der zu der aktuellen Auslösungsposition (PCi) nächstgelegenen Istposition (Pi), und dies bezogen auf die aktuelle Auslösungsposition (PCi) in einer gegebenen Begrenzung (L); und
- eine Einheit (10) zur Erzeugung des Impulssignals, konfiguriert zum Erzeugen eines Impulssignals für die aktuelle Auslösungsposition (PCi), wenn und seitdem die zwei folgenden Bedingungen gleichzeitig erfüllt sind:

    • das bewegliche Element (2) erreicht die nächstgelegene Istposition (Pi); und
    • diese nächstgelegene Istposition (Pi) befindet sich bezogen auf die aktuelle Auslösungsposition (PCi) innerhalb der gegebenen Begrenzung (L).

**7.** Vorrichtung nach Anspruch 6, **dadurch gekennzeichnet, dass** die Einheit (5) zur Erzeugung von Istpositionen eine Interpolationseinheit (13) beinhaltet, konfiguriert zum Bestimmen einer Folge von jedes Mal zwischen zwei sukzessiven tatsächlichen Positionen, gemessen durch die Messeinheit (6), interpolierten Positionen, unter Berücksichtigung einer Bewegungsgeschwindigkeit des beweglichen Elements, wobei die Istpositionen die tatsächlichen Positionen und, zwischen zwei sukzessiven tatsächlichen Positionen, die interpolierten Positionen umfassen.

**8.** Vorrichtung nach einem der Ansprüche 6 und 7, **dadurch gekennzeichnet, dass** die Einheit (4) zur Erzeugung von Auslösungspositionen beinhaltet:

- eine Erfassungsuntereinheit (16), konfiguriert zum Erfassen von vorher festgelegten theoretischen Auslösungspositionen; und
- eine Verarbeitungsuntereinheit (17), konfiguriert zum Anpassen dieser theoretischen Positionen an ein Bewegungssystem, konfiguriert zum Erzeugen der Bewegung des beweglichen Elements ausgehend von zu den Fehlern des Bewegungssystems vorher festgelegten Informationen, um daraus die Auslösungspositionen abzuleiten.

**9.** Vorrichtung nach einem der Ansprüche 6 bis 8, **dadurch gekennzeichnet, dass** die Vergleichseinheit (8) beinhaltet:

- eine Berechnungsuntereinheit (24), konfiguriert zum Berechnen eines Abstandsparameters;
- eine Vergleichsuntereinheit (25), konfiguriert zum Berechnen des Unterschieds zwischen diesem Abstandsparameter und einem vorher festgelegten Wert; und
- eine Bewertungsuntereinheit (29), konfiguriert zum Bewerten der Variation des Unterschieds und zum Detektieren der Position, an der der Unterschied am geringsten ist, wobei die nächstgelegene Istposition dieser Position entspricht.

**10.** Baugruppe zur Verarbeitung eines Objekts, **dadurch gekennzeichnet, dass** es beinhaltet:

- einen Träger (3), der das Objekt trägt;
- ein bewegliches Element (2), vorgesehen mit einem System zur Verarbeitung, fähig, bei dem Empfang eines Auslösungs-Impulssignals eine Tätigkeit durchzuführen, wobei das bewegliche Element (2) bezogen auf den Träger (3) eine relative Bewegung durchführt; und
- eine Vorrichtung (1) zur Erzeugung eines Impulssignals nach einem der Ansprüche 6 bis 9, die dazu bestimmt ist, bei der Bewegung des beweglichen Elements (2) Impulssignale zu erzeugen und an das Verarbeitungssystem zu übertragen.

**Claims**

1. Method for generating a pulsed signal at positions called triggering positions of a moving element (2), said moving element (2) being capable of being subjected to a relative movement according to at least two degrees of freedom, said method comprising a step of generating triggering positions, method according to which, during at least some of the movement of the moving element (2), the continuation of following successive steps is implemented iteratively:

   - a step (E1) of generating positions called actual positions, consisting of generating actual positions (PRi) of said moving element (2) defined according to axes (Xi, θX, Yi, θY, Zi, θZ) corresponding to said degrees of freedom, the step (E1) of generating actual positions comprising a measuring step (E11) consisting of measuring, in real time, successive effective positions of the moving element (2), said actual positions (PRi) comprising at least said effective positions;
   - for successive triggering positions, each time for a triggering position (PCi) called current triggering position:

      • a comparison step (E3) consisting of comparing successive actual positions (PRi), generated in real time in step (E1) of generating actual positions, at this current triggering position (PCi) so as to identify, from among these successive actual positions (PRi), the actual position (Pi) closest to said current triggering position (PCi), and this within a given limit (L) with respect to said current triggering position (PCi); and
      • a step (E4) of generating a pulsed signal, consisting of generating a pulsed signal for the current triggering position (PCi), if and when the two following conditions are simultaneously fulfilled:
      • the moving element (2) reaches said closest actual position (Pi); and
      • this closest actual position (Pi) is situated within the given limit (L) with respect to said current triggering position (PCi).

2. Method according to claim 1, **characterised in that** the step (E1) of generating actual positions comprises an interpolation step (E12) consisting of determining a continuation of interpolated positions between, each time, two successive effective positions measured during the measuring step, by considering that a speed of movement of the moving element, said actual positions (PRi) comprising said effective positions and, between two successive effective positions, said interpolated positions.

3. Method according to one of claims 1 and 2, **characterised in that** the step (E1) of generating triggering positions comprises:

   - an inputting sub-step consisting of inputting desired positions; and
   - a treatment sub-step consisting of adapting these desired positions to a movement system configured to generate the relative movement of said moving element (2), from predetermined information relating to errors of said movement system, to deduce said triggering positions from it.

4. Method according to any one of the preceding claims, **characterised in that** the comparison step (E3) comprises:

   - a calculation sub-step consisting of calculating a distance parameter;
   - a comparison sub-step consisting of calculating the difference between this distance parameter and a predetermined value; and
   - an evaluation sub-step consisting of evaluating the variation of said difference and of detecting the position at which said different is the lowest, the closest actual position corresponding to this latter position.

5. Method according to claim 4, **characterised in that** the calculation sub-step consists of calculating the distance parameter $D^2$ using the following expression:

$$D^2 = \sum_{i=1}^{N} (PRi - PCi)^2$$

wherein:

   - $PR_i$ represents the coordinate according to a degree of freedom $Li$ of the actual position considered;
   - $PC_i$ represents the coordinate according to the degree of freedom $Li$ of the current triggering position; and

- *N* represents the number of degrees of freedom *Li* of the moving element (2).

**6.** Device for generating a pulsed signal at positions called triggering positions of a moving element (2), said moving element (2) being capable of being subjected to a relative movement according to at least two degrees of freedom, said device (1) comprising:

- a unit (4) for generating triggering positions;
- a unit (5) for generating positions called actual positions, configured to, during at least some of the movement of the moving element, generate actual positions (PRi) of said moving element (2) defined according to axes (Xi, $\theta$X, Yi, $\theta$Y, Zi, $\theta$Z) corresponding to said degrees of freedom, the unit for generating actual positions comprising a measuring unit (6) configured to measure, in real time, successive effective positions of the moving element (2), said actual positions (PRi) comprising at least said effective positions;
- a comparison unit (8) configured to compare, for a triggering position (PCi) called current triggering position, successive actual positions (PRi), generated in real time by the unit (5) for generating actual positions, at this current triggering position (PCi) so as to identify, from among these successive actual positions (PRi), the actual position (Pi) closest to said current triggering position (PCi), and this within a given limit (L) with respect to said current triggering position (PCi); and
- a unit (10) for generating a pulsed signal, configured to generate a pulsed signal for the current triggering position (PCi), if and when the two following conditions are simultaneously fulfilled:

• the moving element (2) reaches said closest actual position (Pi); and
• this closest actual position (Pi) is situated within the given limit (L) with respect to said current triggering position (PCi).

**7.** Device according to claim 6, **characterised in that** the unit for generating (5) actual positions comprises an interpolation unit (13) configured to determine a continuation of interpolated positions between, each time, two successive effective positions measured by the measuring unit (6), by considering a speed of movement of the moving element, said actual positions comprising said effective positions and, between two successive effective positions, said interpolated positions.

**8.** Device according to one of claims 6 and 7, **characterised in that** the unit (4) for generating triggering positions comprises:

- an inputting subunit (16) configured to input predetermined theoretical triggering positions; and
- a treatment subunit (17) configured to adapt these theoretical positions to a movement system configured to generate the movement of said moving element, from predetermined information relating to errors of said movement system to deduce said triggering positions from it.

**9.** Device according to any one of claims 6 to 8, **characterised in that** the comparison unit (8) comprises:

- a calculation subunit (24) configured to calculate a distance parameter;
- a comparison subunit (25) configured to calculate the difference between this distance parameter and a predetermined value; and
- an evaluation subunit (29) configured to evaluate the variation of said difference and to detect the position to which said difference is the lowest, the closest actual position corresponding to this position.

**10.** Assembly for treating an object, **characterised in that** it comprises:

- a support (3) carrying said object;
- a moving element (2) provided with a treatment system capable of carrying out an action during the receiving of a pulsed triggering signal, the moving element (2) carrying out a relative movement with respect to said support (3); and
- a device (1) for generating a pulsed signal, according to any one of claims 6 to 9, which is intended to generate and to transmit to said treatment system, pulsed signals during the movement of said moving element (2).

Fig. 1

Fig. 2

Fig. 4

Fig. 5

Fig. 3

EP 3 645 966 B1

**EP 3 645 966 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102006003555 A1